# EUROPEAN PATENT SPECIFICATION

(11) **EP 3 166 784 B1**
(45) Date of publication and mention of the grant of the patent: **03.03.2021**
(21) Application number: 15720433.0
(22) Date of filing: 25.03.2015
(51) Int. Cl.: B32B 5/02, A47C 7/18, B32B 5/18, B32B 5/24, B32B 27/40

(54) **A PILLOW IN POLYURETHANE GEL AND FOAM WITH A LAYER IN FABRIC OR NON-WOVEN FABRIC (TNT) INTERPOSED BETWEEN FOAM AND GEL**
KISSEN IN POLYURETHANGEL UND SCHAUMSTOFF MIT EINER SCHICHT AUS STOFF ODER VLIES (TNT) ZWISCHEN DEM SCHAUMSTOFF UND GEL
COUSSIN EN GEL ET MOUSSE DE POLYURÉTHANE AVEC UNE COUCHE EN TISSU OU EN TISSU NON TISSÉ (TNT) INTERPOSÉE ENTRE LA MOUSSE ET LE GEL

(30) Priority: 05.06.2014 IT FI20140139; 27.10.2014 IT FI20140241
(43) Date of publication of application: 17.05.2017
(73) Proprietor: Green Foam S.r.L., 59100 Prato (PO) (IT)
(72) Inventor: NESI, Marco, I-51037 Montale (PT) (IT)
(74) Representative: Emmi, Mario
(86) International application number: PCT/IB2015/052195
(87) International publication number: WO 2015/186009

(56) References cited:
- EP-A2- 1 103 371
- WO-A2-2013/138479

## Description

### Technical field

The present invention concerns the technical field relative to objects and accessories for rest.

In particular, the invention refers to an innovative pillow in polyurethane gel and foam in which the coupling between the two materials results to be much more efficient and in which the further operation of holing to create eventual aeration holes results to be much simpler and more precise.

### Background art

Pillows realized through the coupling of a polyurethane foam with a polyurethane gel have long been known and produced by different producers.

The pillow in polyurethane foam has the advantage of adapting itself to the shape of the body, therefore it allows to obtain correct postures. It is therefore very efficient, for example, for people that suffer from cervical problems.

The polyurethane foam has, however, the disadvantage of holding the heat, therefore an additional layer in gel confers better thermal dissipation features. In that sense, the coupling of the two materials unites the features of both, allowing the product to result to be comfortable and functional.

In order to optimize the aeration passing holes are made through the entire thickness of the pillow.

The productive process foresees therefore the arrangement of a mould and the pouring in said mould of a layer of polyurethane gel and a layer of polyurethane foam. In such a manner, during the reaction for the formation of the urethane, the gel reacts with the foam bounding together during the solidification thanks to the implicit glueing features of the materials.

For example, in accordance with a technique, it is possible to realize separately gel blocks, pouring them in appropriate moulds, to then leave them to rest for a variable period of time from some hours to some days in such a way that the polyurethane in gel completes its solidification process.

Once the blocks are ready (generally tablets of rectangular shape with a height of about 1 centimeter), these can be arranged each one in a mould in such a way as to pour on them the polyurethane foam which reacts for the formation of the urethane expanding, solidifying and bonding with the gel at the same time.

The final product presents itself in the shape of a stratified body in which a layer of gel is overlapped and bound with a layer of foam.

On the basis of the type of mould used, the gel can result to be in part englobed in the foam that wraps it in correspondence of the inferior face and leaving its superior face free (included a good part of the height).

Alternatively, there can be two layers exactly overlapped.

The foam, when solidified, has the features of significant softness and shape memory, while the overlapping gel favours the dissipation of the heat and, above all, has optimal dampening features (for example, in the case in which, as known, such a technology is used for the realization of paddings for bicycle saddles, car seats, etc.).

There exist various patents that discuss precisely a coupling between a polyurethane gel and a polyurethane foam in similar fields, for example for the realization, as said, of bicycle saddles and even for bodies in general.

Among the various publications we can mention, for example, European patent EP1103371 in the name of TechnoGel, or publications such as IT1270728 or IT1294713 in the name of Selle Royal.

It is also known, always in common practice, that the polyurethane gel, according to the quantity of plasticizer contained, will present itself as a highly deformable body, provided with significant softness and flexibility and therefore very similar to a pasty rubber.

Plasticizers in a percentage of, for example, the 50% and more allow to give greater consistence to the gel which, therefore, does not chalk and does not crumble during its use. Its life is therefore significantly longer and no external coating films are required that serve to impede that excessively "rubbery" parts of the gel detach, remaining attached, for example, to the face of the user, whose head rests on the pillow during use.

The layer of gel in that case results to be easily manageable.

The pillow can also be holed to create aeration holes, without the risk of tears due to the pliability and stickiness of the gel, which would risk to remain attached to the punches during the holing.

On the other hand, however, the capacity of reciprocal adhesion between gel and foam results to be significantly reduced during the formation of the urethane.

In that sense, the known practice foresees the application of a thin layer of polyurethane film interposed between gel and foam and that favours the adhesion between the two parts (basically the film serves to promote the adhesion).

Nevertheless, the use of such a polyurethane film, being a film of thicknesses in the order of micron, cannot comply with a function of structural stiffening and therefore, if the pillow has to be holed, in any case a problem of inherent high deformability of the gel has to be faced which complicates significantly the correct penetration of the tips.

Moreover, the promotion of adhesion between the two parts, even if improved, is not optimized.

Values of plasticizers generally inferior to the 50% render instead the gel very soft, plastic and sticky to the point that, if handled, it chalks, remaining stuck to the fingers exactly like a chewing gum.

In that case, the adhesion between the gel and the foam results to be stronger but it is necessary to coat externally the pillow with an isolating film to avoid that it chalks during use. The transport in the mould results also difficult since, under the action of its weight, the layer of gel can deform to the point that it tears into two or more parts. Moreover, the operations of holing with punches to create aeration holes in the pillow are in fact unfeasible. This is because the gel remains attached to the punches of the machine, therefore rendering impossible the realization of precise holes and risking tears of the layer of gel. Moreover, the gel, of which many residues remain in the punches, could slip in parts of the machine, blocking it or causing breakdowns.

In IT1294713 (priority document of the European filing EP0903321) is described, for example, the realization of a saddle for bicycles in which the body of the padding is precisely formed through the chemical coupling between a polyurethane gel and a polyurethane foam.

The patent describes a realization procedure in which a flexible coating external layer is applied on the bottom of a mould on which gel and foam are poured. The coating is kept in position, for example, through aspiration. On the coating is first poured a layer of gel. On the layer of gel is then applied a sheet in plastic presenting an ornamental element, for example a logo. Subsequently, the foam is poured on the gel. In that manner, the padding results to be externally coated since the gel adheres also with such a coating and between gel and foam results to be interposed such an ornamental element. The external coating has a transparent zone to allow to visualize the underlying gel and therefore also the ornamental element rendered visible thanks to the transparency of the gel.

Such a patent, as introduced above, in fact teaches the realization of bodies obtained by coupling with a polyurethane gel a polyurethane foam and, in that case, interposing a sheet in plastic on which the logo is presented.

Nevertheless, such a sheet in plastic has in this case only a decorative function since, precisely because it is of plastic, does not favour the adhesion between the two materials, gel and foam but, on the contrary, it interposes creating a separation pocket. In that sense, it is not possible to select decorative sheets of an area equivalent to the overlying gel since, in fact, they would impede totally the cohesion between gel and foam creating a net layer of separation.

Moreover, even if implicitly serving as internal stiffening element, the selection of a sheet in plastic would render the holing impossible since the plastic would break in many points under the action of the punches.

The following further documents EP1103371 and WO 2013138479 are prior art.

In particular WO2013/138479 corresponds to the preamble of the claim 1.

### Summary of invention

It is therefore the aim of the present invention to realize a body in polyurethane material, preferably a pillow, which solves said technical inconveniences.

In particular, it is the aim of the present invention to provide a body, preferably a pillow, in polyurethane gel and foam that results to be as needed perforable to create aeration holes and in which the adhesion is optimized between gel and foam also when gel were used with a high percentage of plasticizer, for example superior to 50% or 55% of plasticizer.

It is also the aim of the present invention to provide a body, preferably a pillow, in which it is possible to insert between polyurethane gel and polyurethane foam a decorative element, presenting for example a logo, and that at the same time serves as a structural stiffening element and as promoter of adhesion, thus allowing to select any size of the decorative element.

These and other aims are therefore obtained with the present body, preferably a pillow, in accordance to claim 1.

The body comprises at least one part in gel and at least one part in polyurethane foam that are coupled.

The gel does not bind directly with the part in foam but an intermediate layer interposed between gel and foam is rather foreseen.

In accordance with the invention, such an interposed layer can be in the shape of a fabric or, preferably, of a non-woven fabric, called with the acronym TNT.

It has been surprisingly found out that the use of an interposed layer in fabric or TNT favours and optimizes the adhesion between the gel and the foam, also when the gel used presents high percentages of plasticizer (for example, superior to 50%). In this manner, it is not necessary anymore, for optimizing the adhesion between gel and foam, to have to use a gel with a low content of plasticizer.

The fabric or the non-woven fabric also stiffens the body as a whole and supports the overlying layer in gel, limiting its inflexions and therefore rendering simpler and more precise the eventual operation of holing of the pillow to create the aeration holes. Under the action of pressure of the punches the layer in fabric limits the deformation of the body in general and of the gel, allowing an easier and more precise penetration of the punch.

Obviously, a fabric or the non-woven fabric does not break but simply holes under the action of the punch.

The use of the TNT has a further advantage with respect to the use of a normal fabric, such as cotton.

The TNT does not foresee weavings according to warp and weft and for that reason it does not lose filaments in case it is holed.

In this manner, during the eventual holing of the pillow, there is no risk that fragments of fabric tear and get inserted in the pillow, rendering imperfect both the hole itself and the incision of the fabric.

Advantageously, said layer (4) can be in direct contact on one part with the gel and on the opposite part with the foam.

Advantageously, the layer (4) is connected with the gel through the implicit glueing features of the gel and on the opposite part with the foam through a glueing material.

Advantageously, the layer (4) is such as to form an exceeding edge (4') exiting from the perimeter delimiting the part in gel.

Advantageously, said body presents at least one or a plurality of passing holes.

Advantageously, said body can, for example, be a pillow.

It is also described here a method for the realization of a body in a polyurethane material and comprising the operation of coupling of at least a part in polyurethane gel (3) with a part in polyurethane foam and in which the interposition of a layer (4) is foreseen interposed between said part in polyurethane gel and the part in polyurethane foam, said layer (4) being in the shape of a fabric or a non-woven fabric (TNT).

In particular, advantageously, the following phases are provided:
- Pouring in a first mould (10) of a polyurethane gel;
- Application, on the layer in gel, of a layer (4) of material in fabric or non-woven fabric (TNT);
- Reaction of the gel for obtaining a body formed by gel and comprising the layer (4) connected to the gel following said reaction;
- Formation in a second mould of a body through the pouring of a polyurethane foam material;
- Connection of the layer of gel, provided with fabric or TNT, with said body in polyurethane foam through a glueing material.

Other alternative solutions are possible, but they do not form part of the present invention.

Alternatively, advantageously, the following phases can be foreseen:
- Pouring in a mould (10) of a polyurethane gel;
- Application, on the layer in gel, of a layer (4) of material in fabric or non-woven fabric (TNT);
- Reaction of the gel for obtaining a body formed by gel and comprising the layer (4) connected to the gel following said reaction;
- Pouring, on said body in gel obtained, of a polyurethane foam in such a way that the layer (4) results to be interposed between the gel and the foam.

This alternative embodiment, however, does not form part of the invention.

Alternatively to the preceding one, advantageously, such a method can comprise the operations of:
- Pouring in a mould (10) of a polyurethane foam;
- Application, on the layer in foam, of a layer (4) of material in fabric or non-woven fabric (TNT);
- Reaction of the foam for obtaining a body formed by foam and comprising the layer (4) connected to the foam following said reaction;
- Pouring, on the body in foam obtained, of a polyurethane gel in such a way that the layer (4) results to be interposed between the gel and the foam.

This further alternative embodiment does not form part of the invention as well.

In a further alternative to what has been previously said, advantageously, the method can instead comprise the operations of:
- Pouring in a mould (10) of a polyurethane gel;
- Application, on the layer in gel, of a layer (4) of material in fabric or non-woven fabric (TNT);
- Pouring of a polyurethane foam in such a way that the layer (4) results to be interposed between the gel and the foam;
- Reaction for the formation of the urethane.

This further alternative embodiment does not form part of the invention as well.

In a further alternative to what has just been said, advantageously, the method can comprise the operations of:
- Realization of a body (3) in polyurethane gel;
- Realization of a body (2) in polyurethane foam;
- Arrangement of a layer (4) of material in fabric or non-woven fabric (TNT);
- Connection of the body in gel with the body in foam through a glueing material;
- The layer (4) being interposed between the body (3) and the body (2).

This further alternative embodiment does not form part of the invention as well.

In a further variant of the invention, advantageously, the following operations can be foreseen:
- Application of a fabric on the bottom of a mould (10) and pouring of a polyurethane foam;
- Reaction of the foam for obtaining a body formed by foam and comprising the layer (4) connected to the foam following said reaction;
- Pouring, on the body in foam obtained, of a polyurethane gel in such a way that the layer (4) results to be interposed between the gel and the foam.

This further alternative embodiment does not form part of the invention as well.

### Brief description of drawings

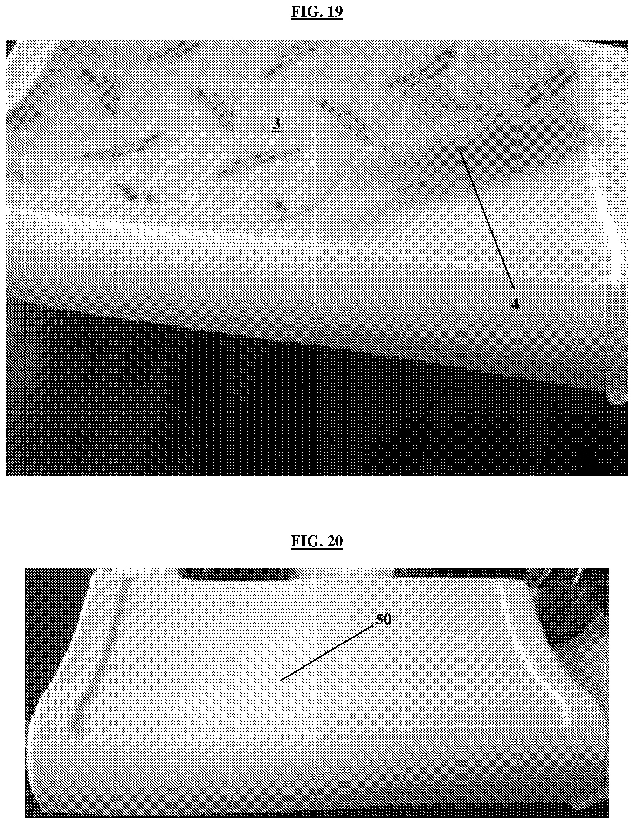

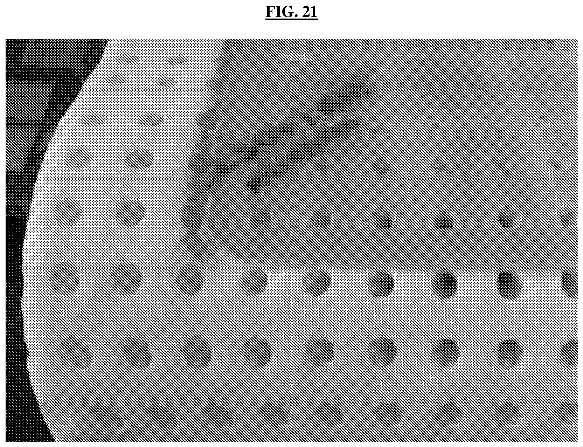

Further features and advantages of the present invention will result clearer with the description that follows of some embodiments, made to illustrate but not to limit, with reference to the annexed drawings, wherein:
- Figure 1 shows, in a schematic manner, a section of a pillow in accordance with the invention, in such a way as to highlight the polyurethane layer 2 formed by the foam that has expanded, the superior layer in gel 3 and the layer 4 interposed between said two layers and formed by fabric or TNT;
- Figure 2 is a further section that better exemplifies such a type of stratification;
- Figure 3 is a schematic axonometric view that highlights an eventual edge 4' exceeding the perimeter of the layer in gel and that adheres to the underlying layer in foam;
- Figure 4 and figure 5 shows in the same way a section with a perpendicular plane A for better highlighting such an edge 4';
- Figures from 6 to 15 show realization phases of the pillow in mould;
- Figure 16 shows schematically a holing phase of the pillow;
- Figures 17 and 18 represent two prototypes of cushion in which, in the layer 4 in fabric or non-woven fabric, has been printed a logo which results to be now visible through the layer in gel;
- Figures from 19 to 21 show a further variant in which the fabric or TNT bonds chemically to the layer in gel prepared in a specific mould thereof and then the whole is connected to the pillow, in turn prepared separately in a second mould, through the use of external glue only after that the processes of polymerization of the two products result to be totally completed. In particular, figure 19 shows a layer in gel previously prepared, on which a TNT is applied during the polymerization of the gel, which rests in a separate manner on a pillow in foam already ready and prepared in its own mould. Figure 20 shows the single pillow with the seat 50 on which to glue the layer of gel. Figure 21 highlights the distance of separation between the edge of the gel and the edge of the seat, distance of separation that can be any, once the layer of gel has been glued to the pillow.

### Description of some preferred embodiments

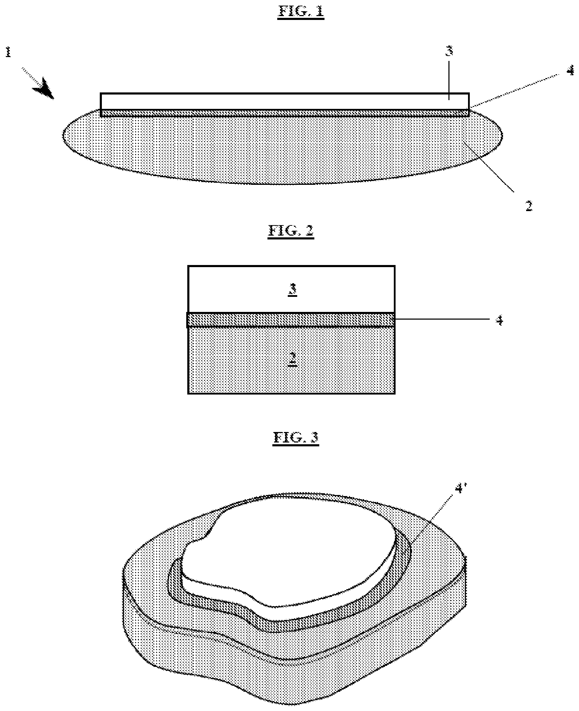

In accordance with the invention, figure 1 and figure 2 represent two explicative sections of the pillow in accordance with the invention.

In particular, a first layer 2 is foreseen, constituted by polyurethane foam expanded during the process of formation. It is then foreseen a superior layer 3 in polyurethane gel and an intermediate layer 4 interposed between the two layers.

Such a layer 4 is formed by fabric (for example, cotton, Lycra, 100% polyester) or, preferably, by the well-known non-woven fabric (TNT).

TNT, unlike an ordinary fabric, is not realized according to weft and warp weaving but instead the fibers present a casual course. The fibers are, for example, arranged in layers and united together mechanically, with adhesives or with thermal processes.

There exist multiple types of non-woven fabric and all of them can be used for the present invention.

Some of them, for example, can be hydro-repellent and/or water-proof, while others can have a certain degree of absorption.

They are well known in the state of the art and are not the object *per* se of the present invention. For this reason, they will not be further explained in detail here.

One of the possible realization processes of such a product is exemplified in the figures from 6 to 13.

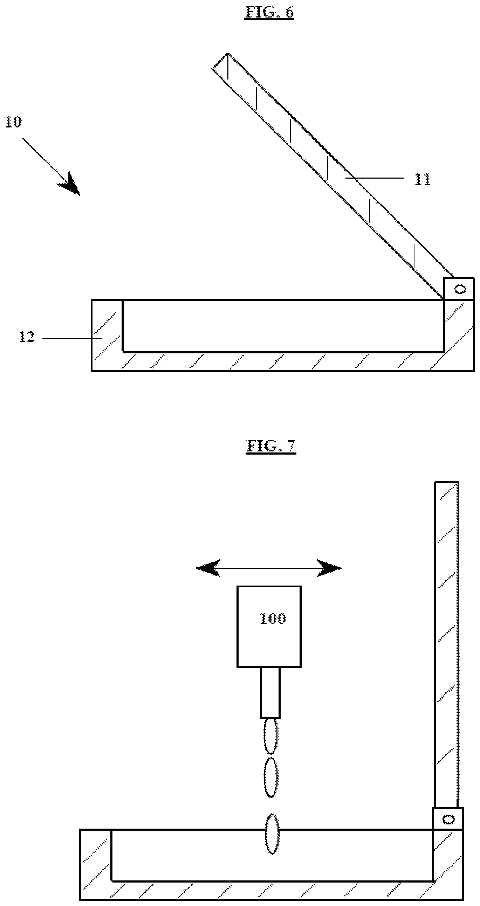

Figure 6 schematizes a mould 10 which is formed by a closing lid 11 and an inferior part 12 that serves as containment volume.

As usual, the mould reproduces the shape of the object that wants to be obtained.

As per figure 7 the next step, through an appropriate nozzle 100 (for example, mechanically or manually mobile), is to pour the polyurethane gel in the mould.

The gel, when poured, is in the liquid state even if with a consistent density and, not having reacted yet, in fact it has not reached its semi-solid state.

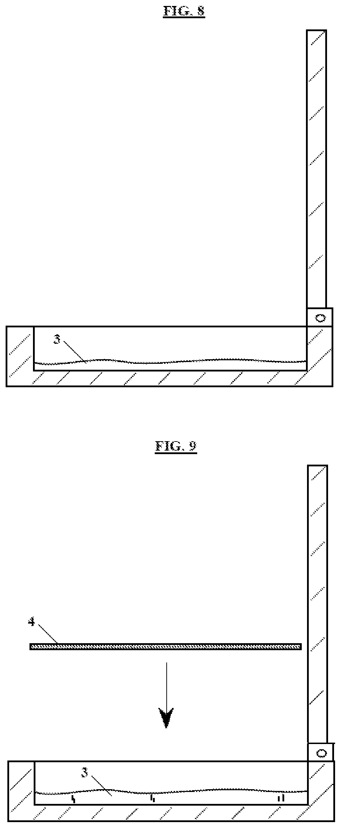

Once the mould has been filled with a layer of liquid gel 3 (see figure 8) the application of the fabric 4 takes place in correspondence of the surface of the layer of gel (see figure 9).

The size of the fabric can be any but preferably, serving itself as promoter of adhesion and mechanical support, it has a shape and an area equivalent or even greater than that of the underlying layer of gel.

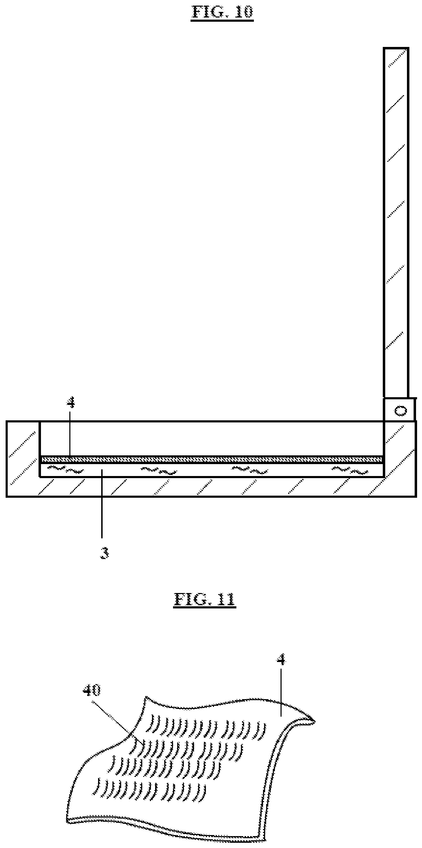

Figure 10 shows the layer 4 that actually "floats" on the underlying liquid layer in gel.

As schematized in figure 11, the fabric or the non-woven fabric 4 is in fact composed of textile fibers that in a case are interwoven and in the other are coupled in a casual manner through heat presses or other well-known systems.

In any case, the fiber has a certain absorbency degree of the liquid and, moreover, there exists a free space, even if minimal, between fiber and fiber.

In that sense, the fabric rested and extended on the underlying layer in gel makes that part of the gel liquid permeates in the interspace between the fibers and part is absorbed by the fibers themselves.

In fact at least a part of the contact surface of the fabric with the gel is impregnated with gel.

During the polyurethane reaction the gel, which solidifies, creates an intimate and strong bonding with the overlying layer 4.

The layer 4 behaves as a sort of cloth paper resting on a wet table in order to dry it, that is it impregnates with the liquid.

In this case, the liquid is precisely the gel that reacts, creating a thick and strong bonding.

In order to avoid that the gel englobes entirely the layer 4 (that is that the layer 4 drowns completely and drowns in the gel), it is preferably to couple the two parts when the gel has already initiated its reactive process, passing therefore to a somehow more solid and consistent status, or when part of the polymer chains of the gel are closed.

To that aim, generally, it is preferable to couple the gel with the layer 4 within a lapse of time comprised between the 40 sec and 1 minute from the pouring of the gel, since the gel after 3 minutes is in fact consolidated.

Naturally, different times could be applied.

In this way, the superior face of the layer in fabric or TNT remains emergent from the gel to allow to repeat the same operation with the foam.

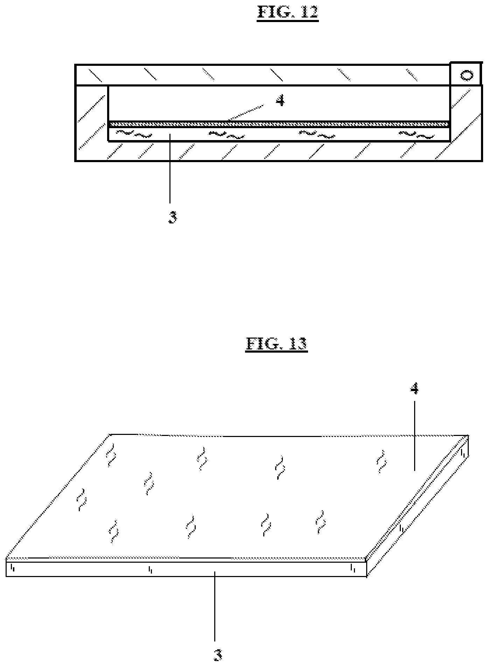

As per figure 12, the mould is closed and it is waited that the gel completes its reaction, therefore obtaining a solid block in gel that englobes the fabric, as schematized in figure 13.

In general, although a mould with a lid has been represented, the moulds for gel are not provided with a lid since the increase in volume of the gel during the solidification process is minimal, unlike the polyurethane foam.

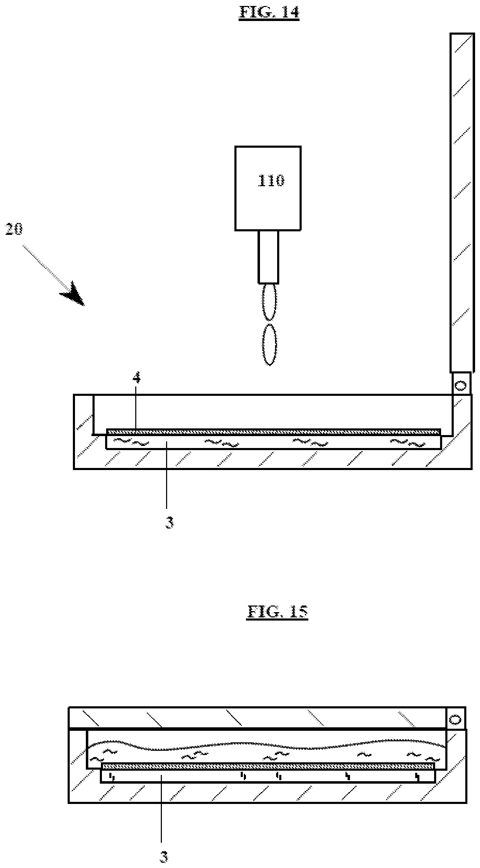

As per figure 14, such a solid block is put in a second mould 20 (equal or of a different shape according to the shape of the final pillow that wants to be obtained) where the foam is poured through an appropriate nozzle 110 (mechanically or manually mobile).

The liquid foam will cover the gel and, as for the case described above, will permeate the fibers and will be absorbed by the fibers themselves in such a way that, following reaction, it solidifies creating an intimate bonding (see figure 15).

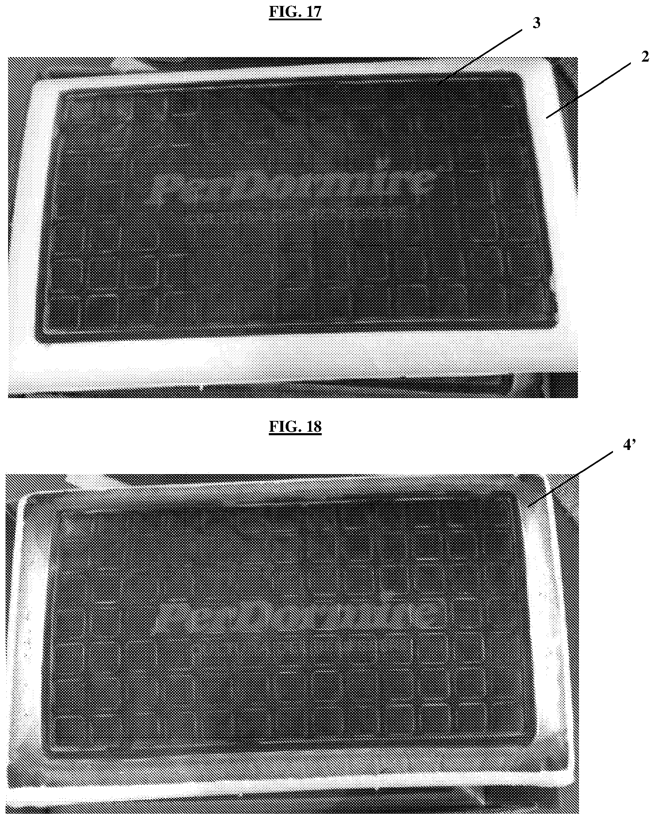

In any case, the final result is, for example, shown in figure 17 and in figure 18.

In figure 17 the pillow is shown having precisely the layer 2 in foam and an overlying layer 3 in gel (material that is *per* se transparent but chemically treatable, as known, in order to increase its transparency).

Thanks to the transparency of the gel, it is possible to see in transparency through the gel a logo or other decorative element that is presented on the layer 4 interposed between foam and gel.

Figure 18 is identical to the preceding one, except for the fact that the area of fabric 4 is selected in such a way as to form a regular edge 4' that exceeds from the layer in gel and that, as described above, results to be anyway intimately bound with the layer in foam.

The edge 4' can in turn be used to add adequate additional decorative elements, the whole avoiding that further processing phases are foreseen precisely in the case additional labels are to be placed.

The mould, during the formation of the urethane, is kept at a temperature of about 50-60° C.

Such temperatures are used when detaching agents are used to be sprayed in the moulds that facilitate the removal of the gel and of the foam from the moulds themselves at the end of the process. Nevertheless, the reactions of gel and foam take place normally also at environment temperature.

Naturally, the inverse solution can also be foreseen. In this case, initially, the foam is poured in the mould, applying to it the layer 4 on the layer of liquid foam. The reaction is waited to obtain the solid body in foam with the layer 4 connected to it and it is arranged in the mould where the gel is poured. In particular, the fabric can be arranged at the bottom of the mould on which the foam is poured. When the foam solidifies and has englobed externally the layer 4, the piece obtained is overturned and on the part of the fabric the gel is poured.

A further variant can foresee the pouring of the gel in a mould, the application of the layer 4 on the layer in poured gel and immediately afterwards the pouring in the same mould of the polyurethane foam, to then close the whole in such a way that the reaction is completed during the formation of the urethane.

In a further constructive variant of the invention, the preventive formation of a solid block of gel and the preventive formation of a solid block of expanded foam could be foreseen, for example through the use of two separate molds, to then foresee the union between them interposing a layer 4 of material, as described (fabric or TNT) and using glue.

For example, glue could be distributed on the two faces of the gel and of the foam destined to be connected between them (the solid block of gel and the solid block derived from the foam) and unite them through the interposition of the layer 4 free from glue.

The glue would permeate the fibers of the layer 4, therefore creating the bonding between the parts.

In a further alternative, the glue can be put on both faces of the fabric 4 and/or on the face of the solid block of the gel and/or of the foam.

In such a manner, the product obtained, even if not obtained with a chemical cohesion during the formation of the urethane, but rather with an external application of artificial glue, has anyway the advantage of resulting greatly rigid thanks precisely to the presence of the layer 4 that serves as support. In such a manner, the procedure of holing results much more precise since the inflexions and deformations of the layer of gel and of the foam under the pressure of the punches are reduced. Moreover, as said, it would be possible to apply to the layer 4 decorative elements that would result visible through the gel and protected from wear since interposed between gel and foam. Last, as also clarified below, the quality of the product is optimized.

In a further realization variant of the invention, with reference to figures from 19 to 21, it can be foreseen to realize separately solid blocks of pre-fabricated gel and solid blocks of pre-fabricated foam, as described above. In this case, however, the fabric or TNT is not connected to the gel through glue but, rather, during the normal process of polymerization of the gel. In practice, the solid block of gel is realized in mould and is applied on it the sheet of fabric or TNT that will bind with the gel during the process of polymerization of the last one. A layer of gel is therefore obtained that already foresees on its inferior face or base the fabric or TNT connected to it. Many layers of gel can be prepared to have them in storehouse.

In separate moulds are prepared also the pre-fabricated of foam that conform the pillow and that can be kept in storehouse. At this point, when desired, the following step is the connection of the gel prepared with the pillow through the use of external glues that can be distributed on the gel and/or on the block in foam.

The advantage of this method is that the productive quality is optimal since, during the traditional foaming, it is impossible to control the climbing over of the foam on the gel. In this way, instead, the result is very precise. Moreover, glueing material is saved because the reaction of the gel is profited from, to bind the fabric to the gel itself.

To that aim, figure 20 shows the single block in foam on which a layer in gel already prepared before can be glued at any moment.

In accordance with this solution, the pillow in foam, as highlighted in figure 19, is preferably realized with a seat 50 that serves as reference for the subsequent coupling with the gel.

The seat has preferably a greater area with respect to the gel and such as to leave preferably some millimeters of distance between the edge of the gel and the edge of the seat (see figure 21).

Such a seat, apart from serving as reference, has also the advantage of bringing the gel to the same level of the external surface of the pillow, thus avoiding to create an annoying step.

Naturally, the seat could be eliminated foreseeing a coupling, always with the glue, between the gel prepared before, and provided with TNT, with the external surface of the block in foam, now not provided with seat.

In all the cases described, the glue that can be used, for example, can be that with the commercial name SIMALFA 325 and produced by the company ALFA klebstoffe AG, with registered address in Vor Eiche 10, CH-8197 Rafz.

Going back to figure 3, the solution is highlighted in which, apart from the process of cohesion of the layers between them, which can be any one of the ones described, the exceeding part 4' of the layer 4 is highlighted which exits from the perimeter of the gel. For example, a fabric can be foreseen of the same shape of the superior layer in gel (for example, rectangular) but of a greater area in such a way as to form an exceeding part that contours regularly the layer of gel, adhering to the underlying foam.

During the formation of the urethane, or through the use of the glues, the intermediate layer results to be, as said, connected on a part to the gel and on the opposite part to the foam.

In such a manner, also the edge 4' will result connected to the layer in solidified foam and this results very advantageous since the same edge can now be used as an appropriate space on which to print or present, for example, a logo, a trademark or a writing in general.

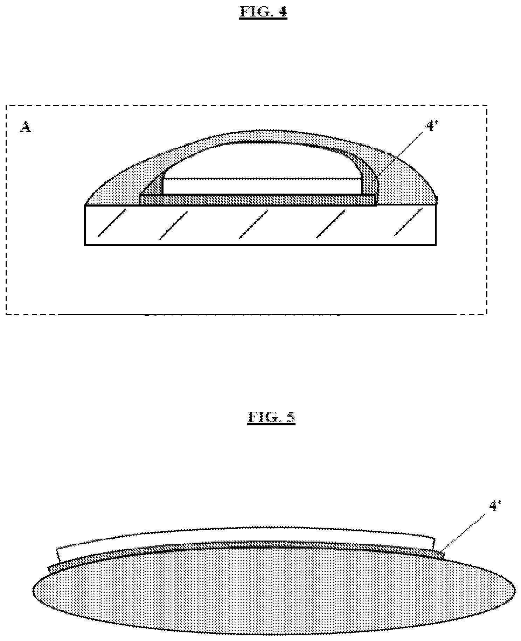

Figure 4 shows a section of a pillow in accordance to the invention, always with the aim of highlighting the edge 4', as the section of figure 5.

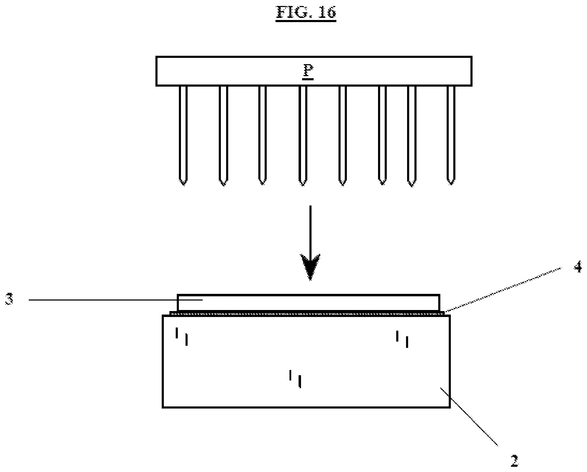

Figure 16 schematizes a press **(P)** provided with a plurality of punches **(p)** that is mechanically lowered on the pillow realized, in order to obtain a plurality of passing holes through the entire thickness of the pillow to optimize the aeration. In such a manner, a plurality of holes are created, therefore an aerated pillow-gel is created.

Naturally, the inflexion of the pillow, under the action of the press (**P**), is now inferior thanks to the interposition of the layer 4 so that a more precise hole is created both in terms of position and in terms of shape thereof.

Naturally, the realization of holes in such pillows, *per* se known, is applicable to all the embodiments of the invention described here.

The thickness of the fabric or the non-woven fabric can be any and selected on the basis of the stiffening that wants to be obtained and of the degree of cohesion.

The present invention, although addressed preferably to the realization of pillows, can obviously be applied in the same way to other similar fields, such as the realization of mattresses constituted by a layer in gel and a layer in foam or paddings for seats, chairs or bicycle saddles and in all cases in which there is a coupling between a polyurethane in foam and a polyurethane in gel.

In that sense, what has been previously described is valid for bodies in general that can form, for example, mattresses, paddings for seats, chairs, saddles, etc.

The specific compositions of the polyurethane foam and of the polyurethane gel are well known in the state of the art and are not the object of the present invention.

Some of these, which can be considered of reference, are for example described in EP1103371.

In all the embodiments described, a water-proofed TNT could obviously be used, which foresees for example a water-proof intermediate layer in such a way that, even if there is a bond between fibers and gel, the gel does not permeate totally the fabric through its thickness, therefore leaving the opposite face of the fabric totally dry and free from gel traces. In that case, the coupling between gel and foam takes place with a net separation between gel and foam through the intermediate fabric that, above all, serves as a promoter of adhesion between the parts (gel and foam) that do not interact directly between them.

Useful thicknesses of the TNT or fabric in all cases can be within the range comprised between 0,3 mm and 2-3 mm, preferably 0,5 mm.

## Claims

1. A body (1) comprising at least one part in polyurethane foam (2) and at least one part in polyurethane gel (3) and wherein a layer (4) is comprised **characterized in that** said layer (4) is interposed between said part in polyurethane gel and the part in polyurethane foam, said layer (4) being in the form of a fabric or of a non-woven fabric and wherein said layer (4) is connected with the gel through the implicit glueing features of the gel during its reactive process of solidification and, on the opposite part, with a pre-fabricated solid block of polyurethane foam through a glueing material.

2. A body (1), as per claim 1, wherein said layer (4) is in direct contact on one part with the gel and on the opposite part with the foam.

3. A body (1), as per claim 1 or 2, wherein said layer (4) is such as to form an exceeding edge (4') exiting from the perimeter delimiting the part in gel.

4. A body (1), as per one or more of the preceding claims, wherein said body presents at least one or a plurality of passing holes.

5. A method for the realization of a body in polyurethane material and comprising the operation of coupling of at least a part in polyurethane gel (3) with at least a part in polyurethane foam and wherein the interposition of a layer (4) is comprised and interposed between said part in polyurethane gel and the part in polyurethane foam, said layer (4) being in the form of a fabric or of a non-woven fabric and wherein the following operations are comprised:
- Pouring of a polyurethane gel into a first mould (10) ;
- Application, on the layer in gel, of a layer (4) of material in fabric or non-woven fabric;
- Reaction of the gel for obtaining a body formed by gel and comprising the layer (4) connected to the gel following said reaction;
- Formation in a second mould of a body through the pouring of a polyurethane foam material;
- Connection of the layer of gel, provided with fabric or non-woven fabric, with said body in polyurethane foam through a glueing material.

## Patentansprüche

1. Ein Körper (1), der mindestens einen Teil aus Polyurethan-Schaum (2) und mindestens einen Teil aus Polyurethan-Gel (3) umfasst, und in dem eine Schicht (4) enthalten ist, **dadurch gekennzeichnet, dass** die genannte Schicht (4) zwischen dem genannten Teil aus Polyurethan-Gel und dem Teil aus Polyurethan-Schaum angeordnet ist, die genannte Schicht (4) in Form eines Gewebes oder eines Vliesstoffes vorliegt und wobei die genannte Schicht (4) mit dem Gel durch die impliziten Klebeeigenschaften des Gels während seines reaktiven Verfestigungsprozesses und auf der gegenüberliegenden Seite mit einem vorgefertigten festen Block aus Polyurethan-Schaum durch ein Klebematerial verbunden ist.

2. Ein Körper (1) gemäß Anspruch 1, wobei die genannte Schicht (4) auf einem Teil mit dem Gel und auf dem gegenüberliegenden Teil mit dem Schaum in direktem Kontakt ist.

3. Ein Körper (1) gemäß Anspruch 1 oder 2, wobei die genannte Schicht (4) so beschaffen ist, dass sie einen überstehenden Rand (4') bildet, der von der Umfassung abgeht, die das Gelteil begrenzt.

4. Ein Körper (1) gemäß einem oder mehreren der vorhergehenden Ansprüche, wobei der genannte Körper mindestens ein oder mehrere Durchgangslöcher aufweist.

5. Ein Verfahren zur Herstellung eines Körpers aus Polyurethan-Material, das den Vorgang des Verbindens von mindestens einem Teil aus Polyurethan-Gel (3) mit mindestens einem Teil aus Polyurethan-Schaum umfasst, und bei dem die Einfügung einer Schicht (4) vorgesehen, die zwischen dem genannten Teil aus Polyurethan-Gel und dem Teil aus Polyurethan-Schaum eingefügt wird, wobei die genannte Schicht (4) in Form eines Gewebes oder eines Vliesstoffes vorliegt, und bei dem die folgenden Vorgänge vorgesehen sind:
- Gießen eines Polyurethan-Gels in eine erste Form (10);
- Aufbringen einer Materialschicht (4) aus Gewebe oder Vliesstoff auf die Gelschicht;
- Reaktion des Gels, um einen Körper zu erhalten, der aus dem Gel gebildet ist und die Schicht (4) umfasst, die nach der genannten Reaktion mit dem Gel verbunden wird;
- Bildung eines Körpers in einer zweiten Form durch Gießen eines Polyurethan-Schaumstoffes;
- Verbindung der mit Gewebe oder Vliesstoff versehenen Gelschicht mit dem genannten Körper aus Polyurethan-Schaum durch ein Klebematerial.

## Revendications

1. Corps (1) comprenant au moins une partie en mousse de polyuréthane (2) et au moins une partie en gel de polyuréthane (3) et dans lequel une couche (4) est formée, **caractérisé en ce que** ladite couche (4) est interposée entre ladite partie en gel de polyuréthane et la partie en mousse de polyuréthane, ladite couche (4) se présentant sous la forme d'un tissu ou d'un tissu non-tissé et dans lequel ladite couche (4) est reliée au gel par les propriétés de collage implicites du gel pendant son processus réactif de solidification et, sur la partie opposée, à un bloc solide préfabriqué de mousse de polyuréthane par un matériau de collage.

2. Corps (1) selon la revendication 1, dans lequel ladite couche (4) est en contact direct d'une part avec le gel et d'autre part avec la mousse.

3. Corps (1) selon la revendication 1 ou 2, dans lequel ladite couche (4) est telle qu'elle forme un bord supérieur (4') sortant du périmètre délimitant la partie en gel.

4. Corps (1) selon une ou plusieurs des revendications précédentes, dans lequel ledit corps présente au moins un ou une pluralité de trous de passage.

5. Procédé de réalisation d'un corps en matériau à base de polyuréthane et comprenant l'opération de couplage d'au moins une partie en gel de polyuréthane (3) avec au moins une partie en mousse de polyuréthane et dans lequel l'interposition d'une couche (4) est prévue, laquelle est interposée entre ladite partie en gel de polyuréthane et la partie en mousse de polyuréthane, ladite couche (4) se présentant sous la forme d'un tissu ou d'un tissu non-tissé et dans lequel les opérations suivantes sont comprises :
- versement d'un gel de polyuréthane dans un premier moule (10) ;
- application, sur la couche en gel, d'une couche (4) de matériau en tissu ou non-tissé ;
- réaction du gel pour obtenir un corps formé de gel et comprenant la couche (4) reliée au gel suite à ladite réaction ;
- formation dans un second moule d'un corps par versement d'un matériau en mousse de polyuréthane ;
- connexion de la couche de gel, pourvue de tissu ou de tissu non-tissé, audit corps en mousse de polyuréthane par un matériau de collage.
